Europäisches Patentamt

European Patent Office

Office européen des brevets

(19)

(11) Veröffentlichungsnummer: **0 590 274 A1**

(12) **EUROPÄISCHE PATENTANMELDUNG**

(21) Anmeldenummer: **93112548.8**

(22) Anmeldetag: **05.08.93**

(51) Int. Cl.5: **A01G 1/04**, C12M 1/12

(30) Priorität: **09.09.92 CH 2838/92**

(43) Veröffentlichungstag der Anmeldung:
**06.04.94 Patentblatt 94/14**

(84) Benannte Vertragsstaaten:
**AT BE DE DK ES FR GB GR IE IT LU MC NL PT SE**

(71) Anmelder: **SYLVAN PILZ AG**
**Tannenbergstrasse**
**CH-8625 Gossau-Zürich(CH)**

(72) Erfinder: **Stadelmann, René J., Dr.**
**Langenmattstrasse 34**
**CH-8617 Mönchaltorf(CH)**
Erfinder: **Franco, Fontana**
**Postfach 99**
**CH-8957 Spreitenbach(CH)**

(74) Vertreter: **Fillinger, Peter, Dr.**
**Rütistrasse 1a,**
**Postfach 358**
**CH-5401 Baden (CH)**

(54) Anlage zur Herstellung von Mikroorganismenkulturen in Reinkultur.

(57) Anlage zur Herstellung von Mikroorganismenkulturen in Reinkultur auf einem körnigen Nährsubstrat, mit einem chemischen Sterilisator. Zum Mechanisieren und Automatisieren der Brutmaterialproduktion und zu deren Qualitätssteigerung ist vorgesehen, dass der Sterilisator (1, 92) für eine chemische Sterilisation ausgelegt und mit wenigstens einer Zulauföffnung (24) für ein chemisches Desinfektionsmittel (22) für den Sterilisiervorgang des Nährsubstrates versehen ist.

FIG. 4

EP 0 590 274 A1

Die Erfindung betrifft eine Anlage zur Herstellung von Mikroorganismenkulturen in Reinkultur auf einem körnigen Nährsubstrat gemäss dem Oberbegriff des Anspruchs 1.

Es sind Anlagekonzepte zur Herstellung entsprechender Mikroorganismenkulturen insbesondere für die Vermehrung von Speisepilzmyzel bekannt. Zur Eliminierung von das Wachstum des Speisepilzmyzels störenden Bakterien oder Schimmelpilzen ist bei der Brutmaterialherstellung eine Grundbedingung, dass das Nährsubstrat vorgängig der Impfung mit dem gewünschten Speisepilzmyzel einer vollständigen Sterilisierung unterworfen wird. Ursprünglich gelang es nur durch Direktimpfung von mit Nährsubstrat gefüllten Glasflaschen, später aber auch mit entsprechenden Plastiksäkken, Brutmaterial herzustellen.

Für die Herstellung von Pilzbrut in kleinen Mengen haben sich bis heute als betriebsinterne Transportmittel Flaschen bewährt, zumindest soweit es sich um eigentliches Zuchtmaterial handelt. Dagegen erwies sich das Beimpfen von ganzen Säcken nicht zeitgemäss, da die Handhabung der Säcke für grosse Stückzahlen ebenfalls aufwendig, personalintensiv und letztlich nicht genügend wirtschaftlich ist, besonders bei steigender Nachfrage nach Brutmaterial. In der US-Patentschrift Nr. 2 932 862 ist die zur Zeit fortschrittlichste Lösung dargestellt. In einer solchen Anlage werden heute täglich ohne weiteres 5 bis 10 t Brutmaterial hergestellt, was einer Einzelsackbeimpfung wegen des damit verbundenen Personalaufwandes entgegensteht. Diese bekannte Anlage weist als zentralen Anlageteil einen Trommelmischer auf, in dessen Prozessraum alle kritischen Arbeitsabläufe chargenweise stattfinden. In dem Trommelmischer wird das Nährsubstrat bei einer Temperatur von über 122° C während 30 bis 120 Minuten und einem entsprechend erhöhtem Druck gequollen und gleichzeitig sterilisiert. Nach der erforderlichen Abkühlung kann es mit dem gewünschten Organismus beimpft und gemischt und die Mischung unter sterilen Bedingungen in einen Inkubationsbehälter abgefüllt werden. Der Mischer selbst ist als V-förmiger Trommelmischer ausgebildet, der um eine horizontale Achse rotiert. Er weist eine einzige Einfüll- und Entladeöffnung an der Spitze der V-Form auf, welche für die Beschickung und die Entleerung jeweils mit entsprechend zu sterilisierenden Anschlussleitungen verbunden werden muss. Heiss- und Kaltwasser sowie Dampf werden über die Drehachsen in den Prozessraum und soweit erforderlich Heiss- und Kühlmedium in einem Doppelmantel geleitet, bzw. darin zirkuliert. Weiter sind Manipulationen während des Prozesses am rotierenden Taumelmischer aus Sicherheitsgründen nicht möglich. Hierzu bedürften Zuleitungen für Mess- und Steuergeräte aufwendiger Drehkupplungen oder der Taumelmischer müsste für eine gewünschte Manipulation angehalten und der Prozess unterbrochen werden. Da folglich Messungen und Kontrollen im Taumelmischer während des Betriebes nicht möglich sind, kann auch die Qualität des Produktes weder überwacht noch gesteuert werden. Ein weiterer Nachteil besteht darin, dass die Abkühlung ausschliesslich über den Hohlmantel erfolgt, so dass der Zeitbedarf wegen des hohen K-Wertes des Produktes unwirtschaftlich gross ist. Dieses Konzept hat sich produktionsmässig für grössere Mengen gleicher Sorte bewährt. Die Hauptnachteile liegen jedoch darin, dass eine Steigerung der Verarbeitungsmenge mit nur einer Einheit nicht möglich ist, da sonst das Nährsubstrat bedingt durch die eigene Masse und das eigene Gewicht schlechter kontrollierbar ist und beschädigt wird. Zudem ist, wegen des schlechten K-Wertes des Ausgangskornmaterials mit einer langsamen Erhitzung zu arbeiten, wenn örtliche Überhitzungen der Körner in grossem Umfang vermieden werden sollen.

Dem Erfinder wurde nun die Aufgabe gestellt, die Nachteile der bekannten Ausführungen zu vermeiden, insbesondere eine Leistungssteigerung bei Einhalten der bestmöglichen Qualität für das Brutmaterial und insbesondere soweit wie möglich automatisierbare Anlage konzipieren zu können.

Die erfindungsgemässe Lösung ist gekennzeichnet durch die Merkmale des Anspruches 1 und erlaubt eine ganze Anzahl besonders vorteilhafter Ausgestaltungen gemäss den Merkmalen der Ansprüche 2 bis 17. Die Erfinder haben erkannt, dass das bisherige Festhalten an der Taumelmischerform sowie an der Dampfsterilisation etwa gemäss der Spitalpraxis bzw. der Sterilisation von Nahrungsmitteln zur Langzeitkonservierung fast jeden grösseren Fortschritt insbesondere für eine anlagetechnische Ausgestaltung blockierte. Die vorzugsweise vorgesehene mechanische Reinigung soll als Vorbehandlung ein möglichst reines Korn bzw. Ausgangskornmaterial von guten und intakten Getreidekörnern bereitstellen. Die erfindungsgemässe chemische Sterilisation erlaubt, ganz besonders bei Anwendung von heissem Wasser unterhalb 100° C, die Körner nicht nur auf den gewünschten Wassergehalt zu bringen sondern verhindert eine Schadeneinwirkung auf die Kornstruktur, d.h. die Nährstoffe bauen sich kaum ab und die Schale bleibt intakt und schützt weiterhin das unveränderte Korninnere.

Sterilisiertes, aufgequollenes Nährsubstrat kann auch durch weitere Behandlungen, beispielsweise in einer Beschichtungsvorrichtung, zu einem höherwertigen Nährsubstrat veredelt und nicht bloss dessen Streu- bzw. Rieselfähigkeit verbessert werden.

Die Erfindung gestattet die Herstellung von Brutmaterial in einer rationalisierten und mechanisierten Anlage automatisch rezeptgesteuert herzustellen. Dabei ist es möglich, je nach Grösse und den spezifischen Abnehmerbedürfnissen in einer grösseren Vielfalt die Anlageelemente zu kombinieren. Es ist ferner auch möglich, die am meisten Zeit beanspruchenden Operationen der Quellung, Sterilisierung und Abkühlung in an sich bekannten Rohrbehältern vorgängig durchzuführen, wobei ohne weiteres mehrere Rohrbehälter parallel geschaltet und alternierend betrieben werden können, um eine kontinuierlichere Produktion des Brutmaterials zu erreichen. Die Beschichtungsvorrichtung sowie die Inoculierstation können für einen Batchbetrieb oder für einen kontinuierlichen Betrieb ausgelegt sein, wobei das Beschichten und Impfen in der gleichen Einheit oder in getrennten Einheiten erfolgen kann. Gleiches gilt für die Aufquell-, Sterilisier- und Abkühlbehälter.

Erstmalig ist es nun möglich, neben grossen Produktionsmengen auch Kleinmengen an Brutmaterial herzustellen, das auch zur Produktion eines eigenen Inoculums für die Inoculierung der grossen Mengen einsetzbar ist.

Bei einer besonders vorteilhaften Anlage wird vorgeschlagen, Aufquellbehälter, Sterilisator, Abkühlbehälter, Beschichtungsvorrichtung sowie die Inoculierstation in einer einzigen Einheit zu vereinen, wobei die einzelnen Phasen im gleichen Prozessraum zeitverzögert durchgeführt werden. Die ruhende Aufquell- und Sterilisiereinheit wird dabei auf Wägezellen abgestützt, so dass mit den Signalen der Wägezellen ein Teil der Steuerbefehle auslösbar sind. In der Aufquell- und Sterilisiereinheit werden Rührvorrichtungen angeordnet, die mit angepasster Umlaufgeschwindigkeit die einzelnen Phasen optimal unterstützen. Dabei hat die ruhende Ausgestaltung des Prozessraumes den Vorteil einer kostengünstigeren Ausbildung aller Anschlüsse. Ferner bringt der Einsatz einer Vakuumanlage grosse Vorteile, da damit eine rasche Trocknung des Prozessraumes sowie eine Regulierung der Endfeuchtigkeit des Nährsubstrates durchführbar ist, ohne die Verwendung von steril aufbereiteter heisser Luft. Die Vakuumtrocknung ist ganz besonders wirsam auch in einer grossen Masse an Nährsubstrat.

Die Erfindung wird in der Folge anhand einiger Ausführungsbeispiele mit weiteren Einzelheiten erläutert. Es zeigen:

Fig. 1   Den Aufbereitungsteil als Ausschnitt aus der Anlage gemäss Fig. 4 für das Nährsubstrat;

Fig. 2   die Wasseraufnahme von Roggen in Abhängigkeit von Temperatur und Zeit;

Fig. 3   zwei Beispiele für den Prozessverlauf einer vollständigen Nährsubstrataufbereitung und Inoculierung mit Roggen als Ausgangsmaterial;

Fig. 4   das Schema einer vollständigen Anlage für die Herstellung von Brutmaterial für die Pilzzucht;

Fig. 5   ein Schema für die Führung der verschiedenen Medien;

Fig. 6   ein Detail VI aus der Anlage gemäss Fig. 4 für die Inoculierung von kleinen und mittleren Nährsubstratmengen;

Fig. 7   ein Blockdiagramm zum Verfahrensablauf bei einer Anlage nach Fig. 4 und

Fig. 8   eine diagrammatische Darstellung der Anlage nach den Fig. 1 bis 7.

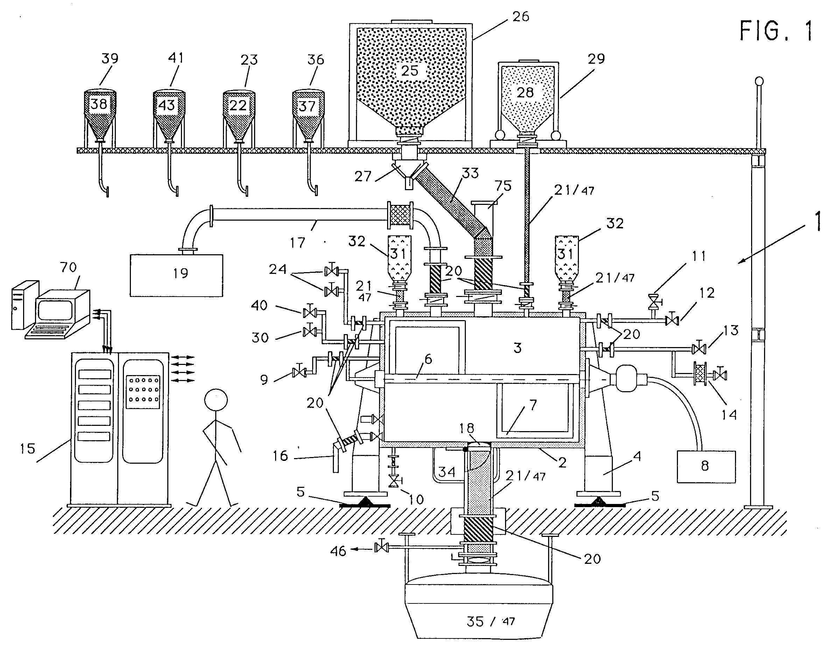

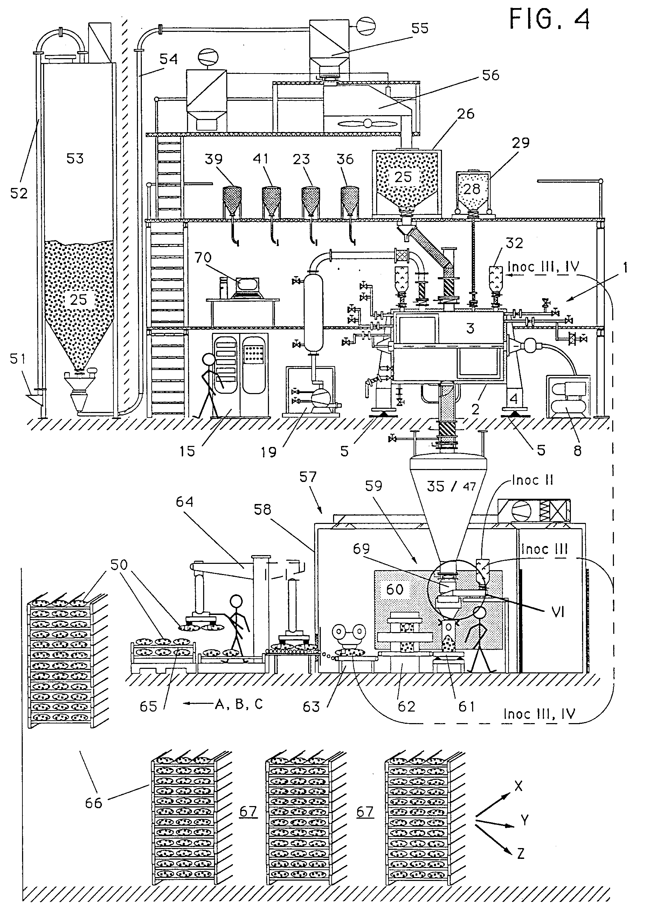

In der Folge wird nun auf die Fig. 1 und 4 Bezug genommen, deren zentraler Teil eine in Fig. 1 herausgestellte Aufquell- und Sterilisiereinheit 1 ist. Diese weist einen, nach aussen vollständig abschliessbaren Mantel 2 auf, der einen Prozessraum 3 umfasst und über Konsolen 4 auf Wägezellen 5 abgestützt ist. Im Inneren des Prozessraumes 3 befinden sich an einer horizontalen Hohlwelle 6 hohle Rührarme 7, welche über ein schematisch dargestelltes Hydraulikgetriebe 8 in Umlauf versetzbar sind. Der Mantel 2 ist als Hohlmantel ausgebildet und zusammen mit der Hohlwelle 6 und den hohlen Rührarmen 7 an einen Temperatursteuerungskreislauf angeschlossen, so dass je nach Bedarf über steuerbare Absperrelemente 9, Kühl- oder Heizmedien in den Hohlmantel 2 bzw. in die Hohlwelle 6 und die Rührarme 7 eingelassen und über einen weiteren ebenfalls steuerbaren Auslass 10 wieder abgeführt werden können. Zur periodischen Reinigung des Prozessraumes 3, insbesondere zur Entfernung von Ablagerungen lässt sich aus einem Reinigungskreislauf wahlweise Spülwasser über einen Spülwasserschieber 11 und Heisswasser über einen Heisswasserschieber 12 einfüllen, wobei alle Steuereingriffe, auch die in der Folge beschriebnen, über eine zentrale Steuerung 15 kontrolliert und befohlen werden können. Im Prozessraum 3 befindliches flüssiges Medium lässt sich über einen Bodenauslass 16 und gasförmiges Medium über eine Aspiration 17 und eine nachgeschaltete Hochvakuumanlage 19 ableiten.

Damit die in den Behandlungsraum 3 der Aufquell- und Sterilisiereinheit 1 eingegebenen Medien tatsächlich darin gewogen werden können, müssen alle festen Anschlüsse nach aussen über flexible Rohre respektive flexible Schläuche 20 mit dem Mantel 2 verbunden sein. Zumindest die grossquerschnittigen Produkt-Zu- und Abführungen weisen im Nahbereich des Mantels 2 eine Schleuse 21 inkl. Drehschieber auf. Diese sind mit einem Spülsystem mit Sprühdüsen 47 versehen (hier nicht dargestellt), so dass periodisch auch die entsprechenden sonst schlecht zugänglichen Räume rasch und automatisch keimfrei reinigbar sind.

Geeignetes Desinfektionsmittel 22 sowie Reinigungsmittel 37 können von Tauschcontainern 23 bzw. 36 über verschliessbare Hahnen 24 eines entsprechenden Kreislaufes in den Prozessraum 3 gespritzt werden. Nach dem Abführen des Endproduktes kann zur Vervollständigung der Sterilisation des Behandlungsraumes 3 und der übrigen Infrastruktur (Schieber, Schleusen und dgl.) Dampf über einen Dampfschieber 13 und Sterilluft über einen Sterilluftschieber 14 eingefüllt werden. Die Aufquell- und Sterilisiereinheit 1 kann auch aus zwei parallelen Einheiten in Einzel- oder Zwillingsbauweise konzipiert sein.

Als Ausgangskornmaterial 25 für das Nährsubstrat sind bei einer Anlage nach Fig. 1 gereinigte Roggenkörner vorgesehen, welche in einem Vorcontainer 26 chargenweise bereitstellbar sind. Der Gesamtbesatz bzw. derBruchkornanteil muss kleiner sein als 5 % bzw. 3 %. Die Körner fliessen unter der Schwerkraft über eine regelbare Dosierklappe 27, ein Kornzuführrohr 33 und einen flexiblen Verbindungsschlauch 20 in den Prozessraum 3. Die Dosiermenge wird über entsprechende Gewichtssignale von den Wägezellen 5 über die Steuerung 15 bestimmt. Der für das Beschichten (Coaten) der Körner benötigte Kalkpuder 28 ist in einem Puderbehälter 29 bereitgestellt und wird über eine ebenfalls sterilisierbare Verbindungsleitung als Schleuse 21 ausgeführt in den Prozessraum 3 geleitet. Dieser Vorgang lässt sich z.B. mit dem von der Vakuumanlage 19 im Prozessraum 3 erzeugten Unterdruck unterstützen. Zusätzliche Präparate können ebenfalls eingeführt werden. Beispielsweise können vor der Puderzugabe Mischfettsäuren 38 aus einem Behälter 39 mittels eines Hahns 40 eingeführt und damit zusätzlich die Nährwerte des Nährsubstrats für das Myzel verbessert und eine die einzelnen Körner überziehende Haftschicht für den Puder und ein optimaler pH-Wert erreicht werden. Die Zuführung lässt sich ebenfalls mit der Vakuumanlage 19 unterstützen. Ferner lassen sich weitere Prozesschemikalen 43, welche die chemische Sterilisation unterstützen, aus dem Container 41 mittels des Hahns 30 in den Prozessraum 3 eindosieren. Neben dem Ausgangskornmaterial 25, dem Aufquellwasser und dem Puder 28 ist die eigentliche Impfmasse respektiv das Inoculum 31, welches in Inocbomben 32 bereitgestellt ist, die Hauptkomponente, die mit dem Ausgangskornmaterial vermischt werden soll. Das Inoculum besteht aus Körnern oder andern rieselfähigen, festen Nährsubstraten, die bereits vollständig mit dem Myzel bewachsen sind. Das Beimischen des Inoculums 31 kann, wie in der Fig. 1 dargestellt ist, direkt aus einer Inocbombe 32 in den Prozessraum 3 erfolgen.

Da sowohl für das Aufquellen wie für das Sterilisieren in engen Grenzen festlegbare Parameter wie Zeit, Temperatur usw. eingehalten werden müssen, wird dieser Kernteil des Verfahrens vorzugsweise als sog. Batchbetrieb respektive Chargenbetrieb durchgeführt. Damit können insbesondere für jedes Partikel des Nährsubstrates gleiche Bedingungen eingehalten werden, so dass auch das Endprodukt einen hohen Grad an Gleichmässigkeit besonders auch für den Wassergehalt aufweist. Am Ende der ganzen Batchdauer kann das sterile Nährsubstrat ggf. das Brutmaterial über ein Austragsystem 34 über eine sterilisierbare Schleuse 21 und eine flexible Verbindungsleitung 20 in einen Zwischenspeicher 35 abgefüllt werden.

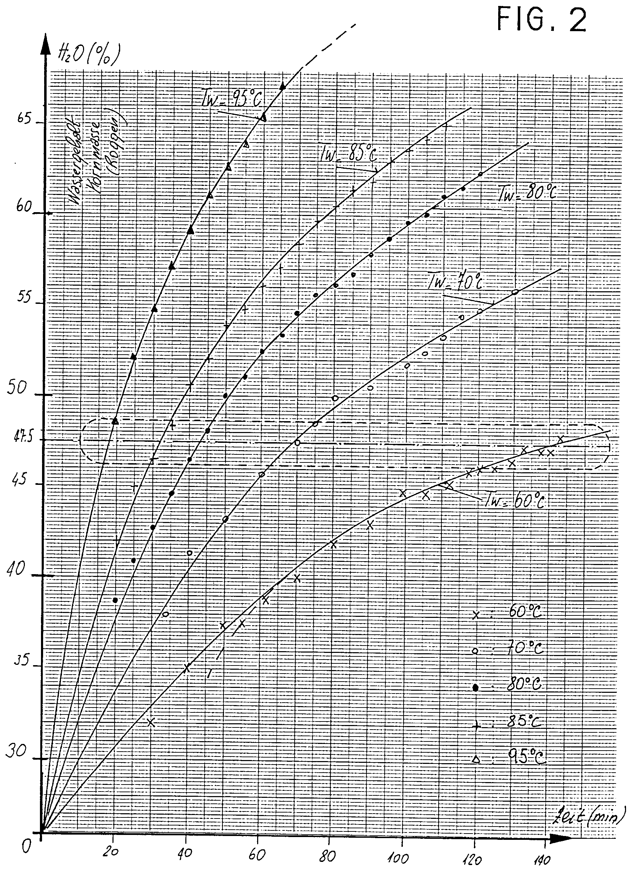

In Versuchsreihen wurde bei verschiedenen Wassertemperaturen die Abhängigkeit der Wasseraufnahme durch Roggen (Aufquellprozess von der Zeit ermittelt und aufgezeichnet (Fig. 2). Augenfällig dabei ist, dass eine relativ strenge Gesetzmässigkeit vorhanden ist. Der Endfeuchtegehalt des Nährsubstrats hängt von der zu impfenden Myzelsorte ab. Generell ist es das Ziel, dass das Nährsubstrat einen Wassergehalt von 40 bis 60 %, vorzugsweise 42 bis 52 % besonders vorzugsweise 48 oder 43 % bei der Impfstoffzugabe von Myzelkulturen zur Pilzbrut-Herstellung aufweist, da dann die Wachstumsbedingungen für die Myzelien der gängigsten Sorten optimal sind. Derselbe Roggen benötigte bei einer Wassertemperatur von 60° C 140 Minuten, bei einer Wassertemperatur von 95° C dagegen nur 20 Minuten, bis er einen Wassergehalt von 47,5 % erreichte. Der Fachmann weiss, dass das Getreide, eine Pflanzenfrucht, sogar innerhalb derselben botanischen Sorte aber einer anderen Ernte unterschiedlich lange Zeiten z.B. für die Aufnahme einer exakten Wassermenge beim Quellen benötigt. Dieser Tatsache muss bei der Steuerung des Verfahrens Rechnung getragen werden.

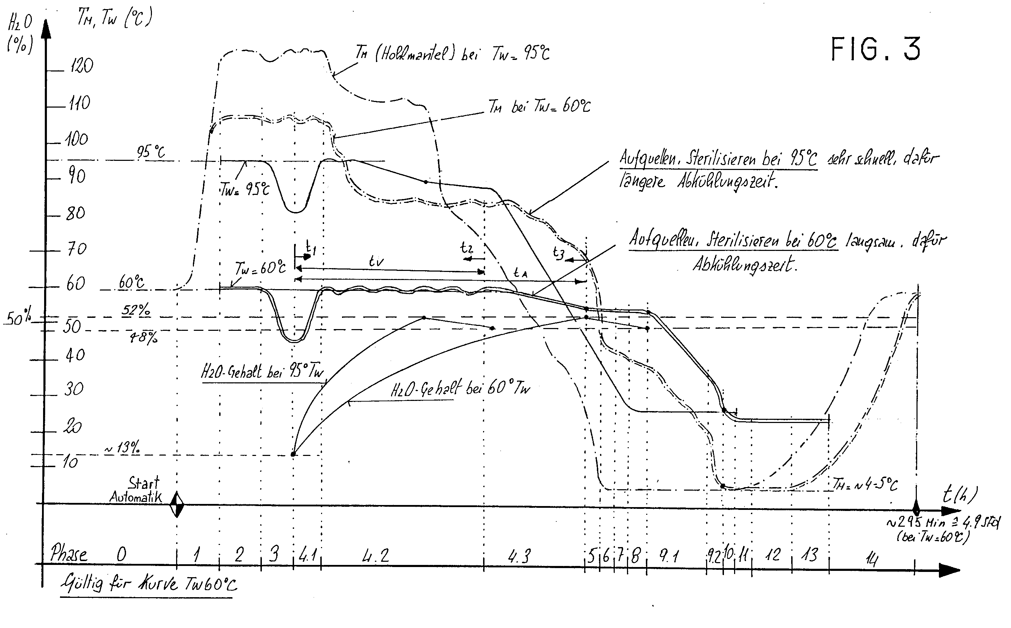

In Fig. 3 sind zwei Beispiele des Prozessverlaufs für eine ganze Batchdauer aufgrund von Versuchswerten dargestellt. Dabei sind zwei unterschiedliche Temperaturen (Aufquelltemperatur), nämlich 60° C und 95° C für das Wasser des Aufquellvorganges aufgezeichnet worden. Diese Temperaturen sind als "empfohlene Unter- und Oberwerte" zu verstehen. Die ideale Temperaturführung liegt in dieser Spanne und hängt vorwiegend von den Anfangskornwerten ab (Sorte, Ernte, Wasseraufnahme, etc.). Die Versuche haben bestätigt, dass, bedingt durch den schlechten K-Wert des Roggens bei der Verarbeitung von Mengen in industriellem Massstab (z.B. 2 bis 10 t), für die Abkühlung aus sterilitäts- und messtechnischen Gründen kein kaltes Spülwasser verwendet werden darf, besonders viel Zeit beansprucht. Folglich läuft mit steigenden Temperaturen das Aufquellen schneller und das Abkühlen langsamer ab. Die Fig. 3 zeigt auch, dass die Abkühlung der Körner unter Vakuum wegen der damit entnommenen Verdampfungswärme wesentlich schneller erfolgt als wenn nur der Hohlmantel 2, die Hohlwelle 6 und die Rührarme 7 gekühlt werden.

Eine andere Temperaturführung, insbesondere über 95° C, als die in Fig. 3 gezeigte ist in der Aufquell- und Sterilisiereinheit 1 möglich, doch dürfen dabei keine thermisch bedingten Schäden an den Körnern auftreten.

Fig. 4 zeigt eine vollständige Anlage für die Herstellung von in vorsterilisierten Brutsäcken 50 abgefülltem Brutmaterial. Ausgangskornmaterial 25 für das Nährsubstrat ist z.B. handelsüblicher, sauber gereinigter Roggen oder Hirse, welcher über einen Annahmetrichter bzw. Normanschluss 51 und über eine pneumatische Förderanlage 52 in einem Roggensilo 53 gelagert wird. Die für ein Batch benötigte Menge Roggen wird über einen weiteren pneumatischen Förderer 54 über einen Abscheider 55 einer trockenen Reinigungseinrichtung 56 zugeführt. Die trockene Reinigung soll noch vorhandenen Fremdbesatz, Schalen, Schmutz und Staub und auch Kornbruch auslesen; sie soll aber so schonend für das Korn durchgeführt werden, dass kein neuer Bruch und keine Beschädigung der Kornschalen entsteht, da die ganze Schale in mehrfacher Hinsicht für die Qualität des Brutmateriales wichtig ist. Es ist erwünscht, dass gleichzeitig mit der Reinigung die Keimzahl der Kornmasse reduziert wird. Je nach Grösse der Anlage ist es möglich, die gesamte Getreidereinigung in die Nährsubstrataufbereitung zu integrieren oder aber die entsprechenden Einrichtungen einer Getreidemühle zu verwenden, damit die genannten Grenzwerte für Besatz und Bruchkorn eingehalten sind. Die gesamte Getreideförderanlage ist dicht geschlossen, um Raumkontaminationen zu vermeiden. Gemäss Fig. 4 ist die Anlage als Kompaktanlage in einem vier Etagen aufweisenden Stahlgerüst aufgebaut, wobei die Getreidereinigung auf der dritten und vierten Etage montiert ist. Reinigungsmittel-Tauschcontainer 36, Puderbehälter 29, Zusatzmittelbehälter 39, Desinfektionsmittel-Tauschcontainer 23 sowie Prozesschemikalien-Container 41 sind auf der zweiten Etage aufstellbar.

Die Aufquell- und Sterilisiereinheit 1 ruht auf Wägezellen 5 direkt auf der speziell schwingungsfrei angelegten Betonplatte.

In einem Untergeschoss befindet sich eine Abfüllanlage 57, in der das behandelte und frisch inoculierte Brutmaterial in vorsterilisierte Brutsäcke 50 abgefüllt wird. Die gängige Praxis bei der Herstellung von Pilzbrutmaterial geht so vor sich, dass in ein Nährsubstrat z.B. in Form einer Masse von gereinigten, sterilen und gequollenen Roggenkörnern, eine kleine Menge mit Myzel bewachsenen Körner eingemischt wird. Nach dieser Impfung (Inoculierung) sind nach einer bestimmten Zeit, z.B.

nach 8 bis 21 Tagen, in Brutsäcken 50 oder Plastikcontainern alle Körner gleichmässig überwachsen und bereit, für das Einbringen in den Kompostnährboden einer Pilzzuchtanstalt. Damit nun aber bei der Abfüllung nicht Fremdkeime wie Bakterien oder Pilzsporen in das Brutmaterial gelangen, wird der ganze Abfüllvorgang in einer Reinraumkabine 58 durchgeführt. Innerhalb der Reinraumkabine 58 kann im Nahbereich einer Sackfüllstation 59 eine innere sterile Zone 60 z.B. durch die Einbringung von steriler Luft der Klasse 100 (U.S. Fed. Std. 2096) geschaffen werden (Laminar-Flow). In dem Zwischenspeicher 35, der im wesentlichen die Form eines nach unten verjüngten Konus hat, ist am unteren Auslass ein von einer elektronischen Waage 61 steuerbares Dosiersystem 69 angeordnet, das bei schonender Behandlung, genaue Portionen z.B. von 2 bis 15 kg Brutmaterial in jeden einzelnen vorsterilisierten Plastiksack bzw. Brutsack 50 abfüllt. Nach Erreichen eines vorgewählten Sackgewichtes wird der volle Sack direkt einer sich ebenfalls unter Laminar-Flow daneben befindlichen Schweissanlage 62 übergeben, die den Sack keimdicht verschweisst. Der Sack weist als Atmungsöffnung einen speziellen Filter auf. Der Brutsack 50 wird dann in einer Etikettieranlage 63 mit allen notwendigen Informationen gekennzeichnet und verlässt die Reinraumkabine 58. Der Brutsack 50 kann nun in normaler Umgebungsluft durch einen Manipulator 64 in spezielle Transport- und Reifepaletten 65 eingelegt, in ganzen Stapeln 66 aufgeschichtet und in einen Reiferaum 67 zur notwendigen Lagerung und anschliessend in einen Kühlraum zur längeren Haltung gebracht werden. Von hier aus erfolgt deren Ablieferung an die Pilzzüchter.

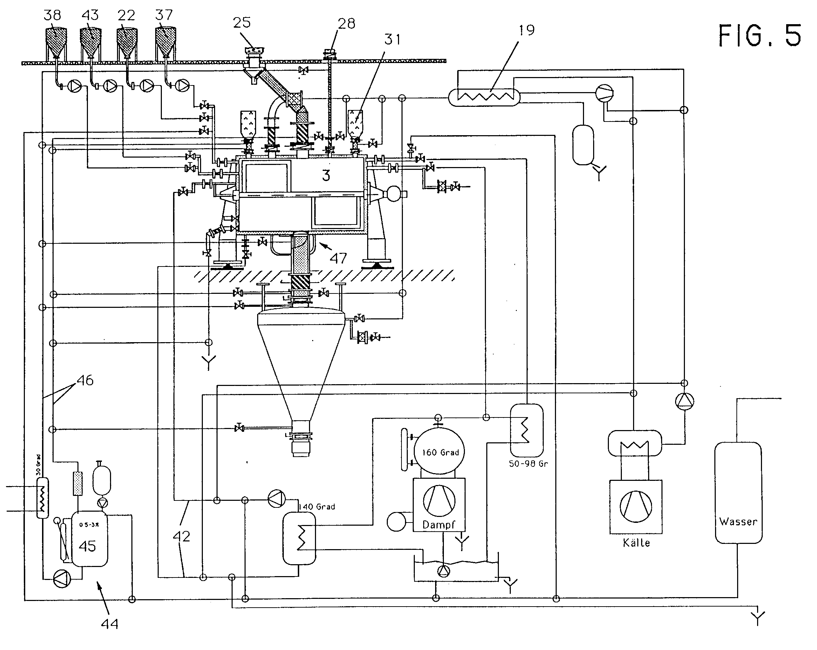

In der Folge wird nun auf die Fig. 5 Bezug genommen, welche die Führung bzw. die Kreisläufe der hauptsächlichen für das Verfahren benötigte Medien schematisch darstellt. Ein Temperatursteuerungskreislauf 42 dient dem Heizen und Kühlen der Anlageelemente. Dieser Kreislauf dient ferner einer optimalen Energieausnützung. Von der chemischen Station 44 eines Sterilisierkreislaufes 46 wird Desinfektionslösung 45 (Gemisch Desinfektionsmittel 22 mit Leitungswasser) über ein Sprühleitungssystem mit Sprühdüsen 47 an alle erforderlichen Stellen geleitet.

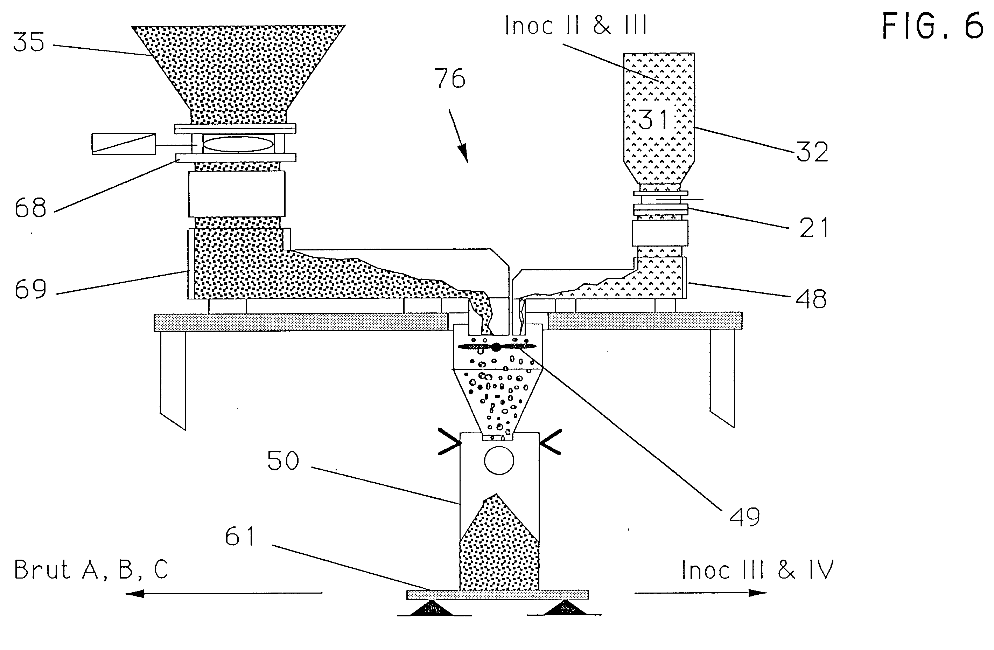

Das Anlagedetail nach Fig. 6 zeigt eine besonders vorteilhafte und erweiterte Ausgestaltung der Sackfüllstation 59. Sie dient erstens für die Herstellung von mittleren und kleinen Mengen von einzelnen Sorten von für den Handel bestimmten Brutsäcken, zweitens für die eigene Vermehrung von Inoculum 31. Einem kontinuierlichen Misch- und Dosiergerät 76 wird von dem Zwischenspeicher 35 über eine Austragsklappe 68 und eine Dosierrinne 69 aufbereitetes Brutmaterial zugeleitet. Dieser Einrichtung gegenüber ist eine ähnliche, aber in den Dimensionen wesentlich reduzierte Zufuhr- und Dosiereinrichtung plaziert. An dieser Einrichtung werden Inocbomben 32, enthaltend Inoculum 31, steril und dicht angeflanscht. Über die Austragsklappe 21 der Inocbomben und die Dosierrinne 48 wird dem Närsubstrat Inoculum dosiert hinzugefügt. Hierauf wird über den Drehtellermischer 49, welcher Nährsubstrat und Inoculum optimal vermischt, das geimpfte Nährsubstrat zur Absackung auf eine elektronische Waage 61 gegeben. Auf diese Weise kann aus reinem und teurem, im Labor gezüchteten Brutmaterial (Inoc II) durch Impfen von Nährsubstrat aus dem Zwischenbehälter 35 eine grössere Menge gleichwertigen Impfmittels (Inoc III) hergestellt bzw. abgeleitet werden. In gleicher Weise kann dieses für die Produktion von Brutmaterial erstmals abgeleitete Impfmittel (Inoc III) mit dieser Einrichtung ein zweites Mal abgeleitet und zu einem gleichwertigen Impfmittel (Inoc IV) vermehrt werden. Der Bedarf an labormässig produziertem Impfmittel (Inoc II) lässt sich somit (im Vergleich mit dem heutigen Bedarf) auf wenige Einheiten reduzieren. Weitere solche Ableitungen zur Vermehrung des Impfmittels sind nur mit Vorbehalten möglich. Inoc IV wird in der Regel für die Grossmengenproduktion und Inoc III für die Mittel- und Kleinmengenproduktion von Brutmaterial verwendet. Der Mischer 49 kann auch ein Schneckenmischer sein.

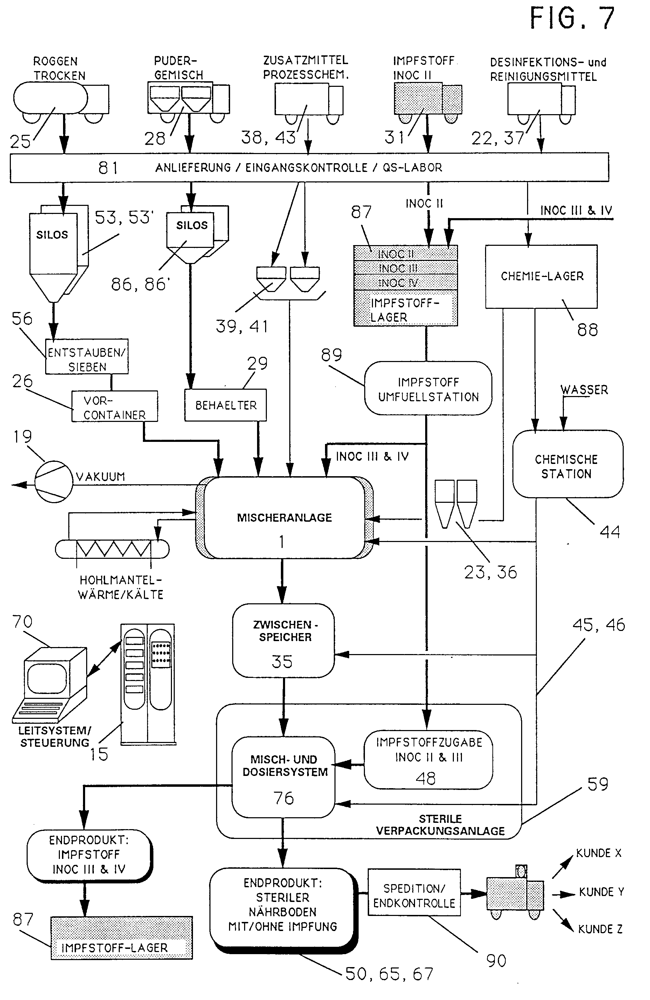

Das Blockschema nach Fig. 7 zeigt den Materialfluss in einer Anlage nach Fig. 4 von der Anlieferung bis zur Ablieferung. Wesentlich dabei ist das Erfassen von Analysewerten an allen wichtigen Schnittstellen zum Reproduzieren des Verfahrensablaufes respektiv Optimieren bei sich verändernden Parametern über eine programmierbare Steuerung 15 mit einem entsprechenden Prozessleitsystem/Speicher 70, so dass bei identisch wiederkehrenden End- und Ausgangsprodukten nach vorgewähltem Schema respektive spezifischem Rezept der ganze Prozess steuerbar ist. Besonders wichtig ist aber auch eine Eingangskontrolle 81, nicht nur der Mengen sondern aller benötigter Qualitätsparameter der Eingangsrohstoffe. Dies betrifft sowohl die Zulieferungen von Rohgetreide 25, Pudergemisch 28, Impfstoff 31 wie auch die Desinfektionsmittel 22. Das Rohmaterial wird in entsprechenden Grosslagern für Roggensilo 53 bzw. anderer Basisnährsubstrate 53' usw. Pudergemischsilo 86, 86', Impfstofflager 87 (Inoc II, III und IV) sowie Chemielager 88 auf Vorrat gehalten.

In Fig. 7 ist auch der Produktfluss für jene Impfmittel dargestellt, welche mit Inoc II, Inoc III und Inoc IV bezeichnet sind.

Da es sich beim Impfmittel Inoc II um kleine Mengen (ca. 1 Liter) einer Reinkultur von Myzel handelt, wird dieses wie vorangehend anhand von Fig. 6 beschrieben, zu Inoc III und IV vermehrt. Diese werden bis zur Reife in dem Impfstofflager 87 aufbewahrt. In einer Impfstoff-Umfüllstation 89 werden die entsprechenden Wechsel von einem Behältnis zum anderen steril vorgenommen.

Das Verfahren lässt sich nun je nach Ausbaugrad und Grösse der Anlage zeitlich und örtlich in ganz verschiedene Schritte aufteilen. Es kann für Spezialkulturen bereits sterilisiertes und gequollenes Nährsubstrat von einem anderen Produktionsort angeliefert und in dem zuvor mit chemischen Mitteln und eventuell Dampf vollständig steril gemachten Prozessraum 3, über einen Anschluss für gequollenes Nährsubstrat 75 (Fig. 1) steril eingefüllt werden. Das Nährsubstrat kann durch Beheizen des Hohlmantels auf eine Temperatur von z.B. 30 bis 40°C gebracht und anschliessend können, bei gleichzeitiger Bewegung der Rührarme 7 Fettsäuren 38 auf die Körner aufgetragen werden.

Anschliessend kann zur Beschichtung der Körner eine gewünschte Menge Kalkpuder von dem Puderbehälter 29 bei fortgesetzter Bewegung der Rührarme 7 in den Prozessraum eindosiert werden. Von einer zuvor aufgesetzten Inocbombe 32 wird spezielles Impfmittel in das Nährsubstrat eingemischt und das ganze Brutmaterial in den Zwischenspeicher abgegeben. Von hier aus wird es über die "Linie" für grosse und mittlere Mengen in Brutsäcke abgefüllt.

Eine zweite Variante liegt darin, die Quellung und ggf. auch die Sterilisierung räumlich dem Prozessraum 3 vorzulagern. Dies hat den Vorteil, dass der besonders zeit- und raumaufwendige Quellvorgang mit Einschluss der Sterilisierung in sehr einfachen Mischern oder Autoklaven, die nur auf Wasser- und Wäremeprozesse ausgelegt sind, durchgeführt werden kann. Bei einer solchen Trennung kann die Aufquellung und Sterilisierung in einfachen Mischern oder Autoklaven durchgeführt werden, was kostengünstiger sein kann. Hierzu können zwei oder mehrere Einheiten parallel oder in Serie geschaltet sein. Auch könnte der bakteriologisch hochsensible Anlageteil für das Beschichten und Inoculieren kleiner dimensioniert werden, weil nun die entsprechenden Phasen weniger Zeit in Anspruch nähmen, so dass der Prozessraum z.B. stündlich für eine nächste Charge bereitstellbar wäre. Die Abfüllung könnte genau gleich wie gemäss der ersten Variante erfolgen. Die örtliche Aufteilung des Prozesses ist grundsätzlich möglich, aus Qualitätsgründen (Parameter und Prozessbeherrschung) jedoch nicht empfehlenswert.

Gemäss einer dritten Variante wird das Aufquellen und Sterilisieren des Ausgangskornmaterials in dem Prozessraum 3 durchgeführt. Es kann aber auch zusätzlich das Korn mit Fettsäuren sowie mit Puder beschichtet werden. In der Folge kann zwischen zwei Möglichkeiten gewählt werden.

Nur eine Teilmenge des fertig aufbereiteten Nährsubstrates wird in den Zwischenspeicher 35 abgelassen und von dort für die Herstellung von Kleinstmengen über Mikrodosierrinnen 48 mit einem Inoc II oder III geimpft. Der Rest des Nährsubstrates kann danach direkt in dem Prozessraum 3 z.B. mit Inoc III oder IV geimpft und entsprechend der "Linie" für grosse Mengen in die Brutsäcke abgefüllt werden. Die zweite Möglichkeit liegt in der Verarbeitung des Nährsubstrates in Teilmengen, welche je mit Impfmitteln unterschiedlicher Sorte geimpft werden. Dabei sind die Anlageteile zwischen jedem Wechsel mit Desinfektionsmittel steril zu reinigen.

Eine vierte Variante liegt in der vollständigen Behandlung von der Einweichung bis zur Inoculierung in dem Prozessraum 3, was in der Folge anhand von zwei ausführlichen Beispielen gemäss Fig. 3 dargestellt wird, welche die Verfahrensschritte mit 60° C respektiv 95° C Aufquelltemperatur, Hochvakuum unterstützter Abkühlung sowie einer chemischen Sterilisation beschreiben.

Beispiel 1 (TW = 60° C)

Vorbereitungsarbeiten

Roggenqualität im Labor bestimmen:
- Anfangs-Wassergehalt ($H_2O$%) des Roggens messen
- Wasseraufnahmefähigkeit messen
- Bruchanteile messen
- Roggenherkunft bestimmen
- Impfsorte definieren
- "Prozesskurve" und Mengenbilanztabelle definieren, d.h. den Prozessablauf hinsichtlich Temperatur, Druck, Rezeptur, Zugaben und Zeit festlegen: $H_2O$% = f (Tp, tv, Roggensorte), wobei Tp eine Funktion von Tw, Tm, ev.Qd und Endwert $H_2O$% (42 bis 48 %) sortenabhängig ist.

Hierbei bedeuten:

Tp = Produkttemperatur
Tw = Sterilisationswassertemperatur
Tm = Hohlmantel-Temperatur (Innenwand)
Td = Temperatur Heiz-Kühlmedium im Hohlmantel
Qd = Direkt eingespiesene Dampfmenge (Temperatur-Unterstützung)
tv = Zeit, während welcher der Roggen im Heisswasserüberschuss liegt (t2-t1)
Ta = Gesamte Aufquellzeit (t3-t1).

Während des Prozesses werden die Soll-Ist-Mengenbilanztabellen laufend automatisch errechnet und ausgedruckt und alle wichtigen Prozessparameter gespeichert. Nach oder während der Bereitstellung der Steuerung 15 bzw. des Leitsystems 70 werden die Puderbehälter 29 mit dem bereits vorsterilisierten und vordosierten Puder 28 sowie die INOC-Bomben 32 mit dem bereits vordosierten Impfstoff auf die entsprechenden Schleusenstutzen mit Flanschanschluss der Aufquell- und Sterilisiereinheit 1 aufgesetzt.

**Phase 1**

**Schleusendesinfektion Beheizung (Dauer: 10 Min.)**

Start für den vollautomatischen Ablauf. Füllen der Schleusen 21 unter den Puderbehältern 29 und den INOC-Bomben 32 mit Desinfektionslösung 45 und Halten der Schleusentemperatur (Ts) bei max. 30° C. Füllen des Hohlmantels 2 mit Heizdruckwasser. Beheizung des Hohlmantels 2 auf Td (= Temperatur gemessen bei Doppelmantel Eintritt), um die in der Prozesskurve vorgegebene Temperatur Tm zu erreichen. Dabei ist Tm einstellbar durch Td.

**Phase 2**

**Wasserzugabe (Dauer : 20 Min.)**

Das Tara-Gewicht der Aufquell- und Sterilisiereinheit 1 wird mittels der Wägezellen 5 erfasst. Anschliessend erfolgt das Einfüllen des Aufquellwassers über Heisswasserschieber 12 in den Prozessraum 3. Das Aufquellwasser hat eine Temperatur von TW = 60° C. Das Aufquellwasser besteht aus normalem Leitungswasser. Die Wasserzugabe wird quantitativ mittels der Wägezellen 5 erfasst.

**Phase 3**

**Zugabe der flüssigen Desinfektionsmittel und allfällig weiteren Prozesschemikalien und Roggenzugabe (Dauer: 10 Min.)**

Zugabe mittels Hahn 30 der Prozesschemikalie 43 z.B. Essigsäure, um einen pH-Wert für eine optimale Wirkung des Desinfektionsmittels einzustellen und um die Sterilisation zu unterstützen. Mengenmässig wird die Zugabe mittels der Wägezelle 5 gesteuert. Zugabe des Desinfektionsmittels 22, das mengenmässig ebenfalls mittels der Wägezellen 5 gesteuert wird. Als Desinfektionsmittel wird z.B. ein Mittel auf der Basis aktivierten Sauerstoffs, z.B. eine Wasserstoffperoxid-Lösung oder eine Peressigsäurelösung oder vorzugsweise eine Mischung beider Lösungen verwendet. Das Mittel vermischt sich mit dem Aufquellwasser zur Desinfektionslösung (0,5 bis 3 % Lösungsanteil je nach Keimbefall). Anschliessend wird der staub- und bruchfreie Roggen in den Prozessraum 3 eingespiesen. Die Roggenzugabe wird mittels den Wägezellen 5 quantitativ erfasst. Beginn Aufquellphase: $t_1$ erfassen. Halten von Tw auf dem voreingestellten Wert. Dazu kann nach Bedarf zusätzlich Reindampf mittels des Dampfschiebers 13 eingelassen werden. Erfassen der Wasserzunahme mittels der Wägezellen 5.

**Phase 4**

**Aufquellen, Sterilisieren, Ablassen (Dauer: 80 Min.)**

Aufquellen und Keimfreimachen der Getreidekörner gemäss Prozesskurve $H_2O = f(Tp,tv)$ im überschüssigen Desinfektionswasser bei Tp = mind. 60° C und tv max. 80 Min.
Ein Teil des überschüssigen Wassers wird von den Körnern für das Aufquellen absorbiert. Nach Ablauf der Aufquellphase $tv = t_2-t_1$ hat der Roggen die erforderliche Feuchtigkeit erreicht (je nach Sorte 42 bis 48 %), was durch eine Probeentnahme überprüfbar ist.
Rasches Ablassen des überschüssigen Desinfektions- und Aufquellwassers mittels spezieller Separiereinrichtung 16 und Zurückhalten der Roggenmasse. Das Austrocknen der oben liegenden bzw. zu starkem Quellen der unten liegenden Körner, wird durch schonendes Bewegen der Rührarme 7 vermieden. Die Wasserentnahme wird ebenfalls mittels Wägezellen 5 erfasst. Weil die Ablassphase ebenfalls eine gewisse Zeitspanne ($t_3$) dauert, absorbiert der Roggen zusätzliches Wasser. Die definitive Wasseraufnahme bzw. der Endfeuchtegehalt des Roggens lässt sich mittels der Messzellen 5 genau ermitteln. In der Regel liegt die Endfeuchte bei 50 bis 52 %. Die genaue Einhaltung der Zeiten $t_1$, $t_2$, $t_3$ sowie der Mengenbilanz in der Misch- und Sterilisationseinheit 1 ist für die Qualität des Nährsubstrates von Bedeutung.

**Phase 5**

**Zusatzmittelzugabe (Dauer: 5 Min.)**

Durch Aktivierung des Hahns 40 fällt die Misch-Fettsäure-Lösung 38 in den Prozessraum 3 ein, die den Nährstoffgehalt des Nährsubstrates steigert und zugleich als Haftsubstanz für das Pudergemisch dient. Das Zusatzmittel wird vorzugsweise in flüssiger und steriler Form zugegeben. Die Zusatzmittelzugabe wird vom Wägesystem 5 erfasst. Schonende Verteilung des Zusatzmittels durch die Rührarme 7.

**Phase 6**

**Puderschleusen trocknen (Dauer: 5 Min.)**

Nach abgeschlossener Misch-Fettsäure-Zugabe werden die Puderbehälterschleusen 21 entleert. Das Desinfektionswasser wird in den Chemie-Tank zurückgepumpt und durch Hochvakuum eine Trocknung durchgeführt. Anschliessend wird eine Gewichtskorrektur am Wiegesystem vorgenommen.

**Phase 7**

**Puderzugabe 1. Teil (Dauer: 5 Min.)**

Durch Aktivierung der Puderbehälterklappen fällt eine erste Menge sterilen Puder über die trockenen Schleusen in den Prozess raum 3. Als Puder wurde z.B. ein Kalk/Gips-Gemisch verwendet.

**Phase 8**

**Puderzugabe 2. Teil (Dauer: 15 Min.)**

Die Dämpfe werden durch die Vakuumanlage laufend abgezogen, anschliessend findet eine zweite Beschickung des Nährsubstrates mit Puder aus den Puderbehältern 29 statt. Durch mehrmaliges Bewegen der Rührarme 7 ergibt sich eine gleichmässige Verteilung des Puders sowie ein gleichmässiges Coaten der Körner. Die Gewichtszunahme wird mittels der Wägezellen 5 erfasst.

**Phase 9**

**Abkühlung, Trocknung (Dauer: 35 Min.)**

Abkühlung von Tp = max. 60° C bis Tp ≤ 30° C und gleichzeitige Trocknung der Körner durch Wasserentnahme Qw mittels Anlegen von Hochvakuum (Oberflächenfeuchte und Restwasser im Prozessraum), wobei nur die im Produkt nicht gebundene Wassermenge mit dem Vakuum sicher entzogen werden kann. Die Wasserentnahme Qw wird mittels der Wägezellen 5 erfasst und der aktuelle Wassergehalt der Roggenmasse wird bis Erreichen des erforderlichen Endwertes (z.B. $H_2O$ = 42-48%) automatisch über die Wägezellen 5 überwacht. Nach Erreichen der definitiven Endfeuchte wird das Vakuum ausgeschaltet und durch Sterilfilter und Sterilluftschieber 14 langsam ausgeglichen. In der Abkühlungsphase ist darauf zu achten, dass der Hohlmantel, die Rührarme 7 und die Rührwelle 6 immer mindestens 10 bis 15° C kühler als das Produkt sind. Dies, um Ablagerungen und Verkrustungen an Metallteilen zu vermeiden. Deren Kühlung kann vorzugsweise bereits nach der Phase 4 durch eine Umschaltung des Heizkreislaufes auf das Kühlen eingeleitet werden. Zur vollständigen Abkühlung des Produktes in der Endphase kann das Kühlsystem zusätzlich mit einem Eiswasser-Kreislauf kurzgeschlossen werden, um das Temperaturgefälle Tp/Tm aufrecht zu erhalten.

**Phase 10**

**INOC-Schleusen trocknen (Dauer: 5 Min.)**

Nach abgeschlossener Trocknungsphase: Entleeren und Trocknen der mit Desinfektionsmittel gefüllten INOC-Bombenschleusen 21 mittels Abpumpen und Anlegen von Hochvakuum.

**Phase 11**

**INOC-Zugabe 1. Teil (Dauer: 5 Min.)**

Durch eine Betätigung der INOC-Behälterklappen fällt eine erste Menge Impfmittel über die trockenen Schleusen in den Behandlungsraum 3.

**Phase 12**

**INOC-Zugabe 2. Teil (Dauer: 15 Min.)**

Abzug der Dämpfe mit Vakuumanlagen und gleichzeitig Beschicken mit dem restlichen Impfmittel aus den Bomben, wobei ein leichtes Vakuum während der Beschickung in dem Prozessraum 3 aufrecht erhalten wird. Mehrmaliges Mischen zur gleichmässigeren Verteilung des Impfmittels mittels Bewegen der Rührarme 7. Gewichtszunahme wird mittels der Wägezellen 5 erfasst.

**Phase 13**

**Austragen (Dauer: 15 Min.)**

Das Gesamtgewicht der Aufquell- und Sterilisiereinheit 1 wird festgestellt und anschliessend wird das Endprodukt durch die Austragsklappe 18 in den Zwischenspeicher 35 unter sterilen Bedingungen ausgetragen, was mit schonender und intermittierender Vor- und Rückwärtsrotation der Rührarme 7 unterstützt wird.

Die ausgetragene Endproduktmenge sowie die Produkterestmenge wird an die zentrale Steuerung 15 gemeldet und zusammen mit dem Rezept gespeichert.

**Phase 14**

**Reinigen, Spülen (Dauer: 35 Min.)**

Wenn bei der nächsten Charge ein anderes Inoculum z.B. ein Inoculum einer anderen Sorte verwendet wird, ist die Reinigung nach dem Prozess sehr wichtig. Abspülen des Mischer-Austragssystems (Nährsubstrataulass 34) mittels nicht dargestellter, automatischer Hochdrucksprühdüsen 47 und Reinigungs- und Desinfektionsflüssigkeit.Zuerst Abwasser mit Produkterückständen in die Wasserentsorgungsanlage über Sterilisier-Kreis-Rücklauf 46 abführen, dann Kreislauf umstellen und Desinfektionsflüssigkeit rekuperieren. Schliessen des Mischer-Austragssystems zur Einhaltung der sterilen Bedingungen. Abspülen, Reinigen und Ablösen von Ablagerungen des bzw. im Mischer(s), der Inoculum- und Puder-Eintragsschleusen, des Vakuumfilters und des Wasser-Feststoff-Separierfilters mittels automatischer Hochdrucksprühdüsen 47. Im Falle von Kalkablagerungen wird eine Entkalkung mit folgendem Reinigungsmittel 37 durchgeführt. Entkalkungslösung bei Tw = max. 30° C, Mischungsverhältnis:

- Ameisensäure (1 %)
- Leitungswasser (99 %)

Hohe Mischerdrehzahl einstellen, Reinigung und Entkalkung durchführen, Spülung mit Leitungswasser, Abwasser mit Produktrückständen in die Wasserentsorgungsanlage führen.

Während der Reinigungsphase des Mischers: Schrittweise Umstellung des Kreislaufes des Hohlmantels von Kühlwasser auf Warmwasser. Meldung der Bereitschaft an die zentrale Steuerung 15. Inspektion des Mischer-Innern. Gelegentliche Öffnung der Mischer-Fronttüre und Inspektion. Zwischen einem oder einer Gruppe sich folgende Batches werden periodisch durch ein Umstellen der Kreisläufe für das Reinigungsmittel, das Warmwasser bzw. das Desinfektionsmittel der Prozessraum 3, die Zwischenspeicher 35 sowie die Schleusen, Stutzen und Anschlüsse einer vollständigen Sterilisation unterzogen. Dazu kann auch Reindampf bei 122° C eingesetzt werden. Die benötigte Zeit zur Abwicklung der Phasen 1 bis 14, d.h. die Batchdauer zur Herstellung einer sterilen, gepuderten und geimpften Roggenmasse von zirka 2'500 l beträgt zirka 295 Min., bzw. 4,9 Std. bei Tw = 60° C bzw. bei Einweichen des Kornes während 80 Min. und chemischer Sterilisation.

Beispiel 2 (TW = 95° C)

Bei diesem Beispiel sind die Vorbereitungsarbeiten und die Phasen 1, 3, 5, 6, 7, 8 und 10 bis 14 gleich wie beim ersten. Es werden folglich nur die Phasen 2, 4 und 9 beschrieben.

## Phase 2

### Wasserzugabe (Dauer: 20 Min.)

Das Tara-Gewicht der Aufquell- und Sterilisiereinheit 1 wird mittels der Wägezellen 5 erfasst. Anschliessend erfolgt das Einfüllen des Aufquellwassers in den Prozessraum 3. Das Aufquellwasser hat eine Temperatur von TW = 95° C. Das Aufquellwasser besteht aus normalem Leitungswasser. Die Wasserzugabe wird quantitativ mittels der Wägezellen 5 erfasst.

## Phase 4

### Aufquellen, Sterilisieren, Ablassen (Dauer: 10 Min.)

Aufquellen und Keimfreimachen der Getreidekörner gemäss Prozesskurve ($H_2O = F(Tp,tv)$) im überschüssigen Desinfektionswasser bei Tp = max. 95° C und tv = max. 10 Min.
Ein Teil des überschüssigen Wassers wird von den Körnern für das Aufquellen absorbiert. Nach Ablauf der Aufquellphase tv = $t_2$-$t_1$ hat der Roggen die erforderliche Feuchtigkeit erreicht (je nach Sorte 42 bis 48 %), was durch eine Probeentnahme überprüfbar ist.
Rasches Ablassen des überschüssigen Desinfektions- und Aufquellwassers mittels spezieller Separiereinrichtung 16 und Zurückhaltung der Roggenmasse. Das Austrocknen der oben liegenden bzw. zu starkem Quellen der unten liegenden Körner, wird durch schonendes Bewegen der Rührarme 7 vermieden. Die Wasserentnahme wird ebenfalls mittels Wägezellen 5 erfasst. Weil die Ablassphase Zeit in Anspruch nimmt ($t_3$), absorbiert der Roggen zusätzliches Wasser. Die definitive Wasseraufnahme bzw. der Endfeuchtegehalt des Roggens lässt sich mittels der Messzellen 5 genau ermitteln. In der Regel liegt die Endfeuchte bei 50 bis 52 %. Die genaue Einhaltung der Zeiten $t_1$, $t_2$, $t_3$ sowie der Mengenbilanz in der Aufquell- und Sterilisationseinheit ist für die Qualität des Nährsubstrates von Bedeutung.

## Phase 9

### Abkühlung, Trocknung (Dauer: 55 Min.)

Abkühlung von Tp = max. 95° C bis Tp ≤ 30° C und gleichzeitige Trocknung der Körner durch Wasserentnahme Qw (Oberflächenfeuchte und Restwasser im Prozessraum), wobei nur die im Produkt nicht gebundene Wassermenge mit dem Vakuum sicher entzogen werden kann. Die Wasserentnahme Qw wird mittels der Wägezellen 5 erfasst und der aktuelle Wassergehalt der Roggenmasse wird bis Erreichen des erforderlichen Endwertes (z.B. $H_2O$ = 42-48%) automatisch über die Wägezellen 5 überwacht.
Nach Erreichen des definitiven Endgewichtes wird das Vakuum ausgeschaltet und durch Sterilfilter und Sterilluftschieber 14 langsam ausgeglichen. In der Abkühlphase ist darauf zu achten, dass der Hohlmantel, die Rührarme 7 und die Rührwelle 6 immer mindestens 10 bis 15° C kühler als das Produkt sind. Dies, um Albagerungen und Verkrustungen an Metallteilen zu vermeiden. Deren Kühlung kann vorzugsweise bereits nach der Phase 4 durch eine Umschaltung des Heizkreislaufes auf das Kühlen eingeleitet werden. Zur vollständigen Abkühlung des Produktes in der Endphase kann das Kühlsystem zusätzlich mit einem Eiswasser-Kreislauf kurzgeschlossen werden, um das Temperaturgefälle Tp/Tm aufrecht zu erhalten.

Die benötigte Zeit zur Abwicklung der Phasen 1 bis 14, d.h. die Batchdauer, beträgt 225 Min., bzw. 3,75 Std. bei Tw = 95° C bzw. bei Einweichen des Kornes während 20 Min. und chemischer Sterilisation.

In der Phase 8 kann vor der "Abkühlung-Trocknung" durch eine Betätigung des Hahns 40 während ca. 5 Min. ein Mittel in den Prozessraum 3 eingegeben werden, das den Nährgehalt des fettigen Nährsubstrates steigert. Das vorzugsweise auf Fettsäurebasis aufgebaute Mittel kann in fester oder flüssiger Form zugegeben werden.

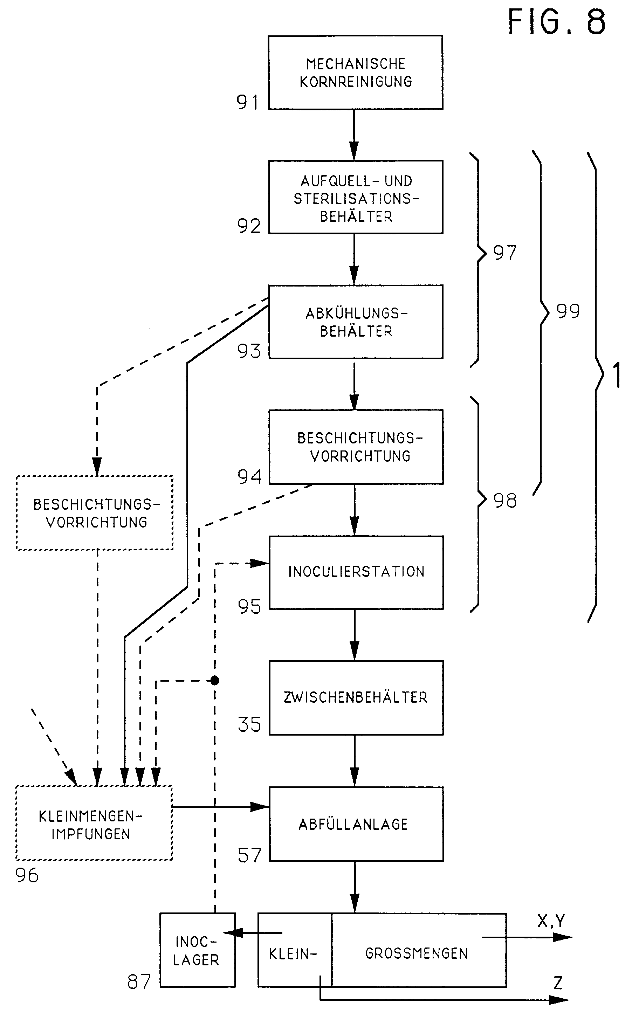

Die vorbeschriebene Anlage kann ablaufmässig wie folgt gegliedert werden (Diagramm nach Fig. 8).

In Richtung des Flusses des Ausgangskornmaterials folgen sich im Regelfall eine mechanische Kornreinigung 91, ein Aufquell- und Sterilisationsbehälter 92, ein Abkühlbehälter 93, eine Beschichtungsvorrichtung 94 und eine Inoculierstation 95. Das Brutmaterial kann bei der Grossmengenherstellung von der Inoculierstation 94 über einen Zwischenbehälter 35 in eine Abfüllanlage 57 überführt und nach der Reife direkt an die Kunden versandt werden. Es ist aber auch möglich von dem Abkühlbehälter 93 oder von der Beschichtungsvorrichtung 94 das sterilisierte und beschichtete Nährsubstrat einer Kleinmengenimpfung 96 zuzuführen, von der es ebenfalls in die Abfüllanlage 57 zum Abfüllen in sterile Säcke gegeben wird. Nach einer genügenden Reife kann das so gewonnene, in Kleinmengen hergestellte Brutmaterial für die eigene Inoculierung in der Inoculierstation 95 oder für eine nochmalige Impfung in der Kleinmengenimpfung 96 eingesetzt werden oder als Handelsware an Abnehmer ausgeliefert werden.

Wie aus der Fig. 8 ferner hervorgeht, können (mit Klammern bezeichnet) z.B. Aufquell- und Sterilisationsbehälter 92 und Abkühlbehälter 93 zu einer Baueinheit 97 als chemischer Sterilisator mit einem einzigen Behandlungsraum zusammengefasst werden.

Ferner kann die Beschichtungsvorrichtung 94 sowie Inoculierstation 95 aus einer einzigen Vorrichtung 98 bestehen, wobei Vorteile für die Gestaltung der Schleusen 21 und deren Sterilisation bzw. Sterilzustand-Einhaltung entstehen.

Gemäss einem weiteren Ausgestaltungsgedanken können Aufquell- und Sterilisationsbehälter 92 sowie der Abkühlbehälter 93 und die Beschichtungsvorrichtung 94 als Baueinheit 99 mit einem einzigen gemeinsamen Behandlungsraum zusammengefasst sein. Vorteilhafterweise für die Produktqualität und die Beherrschung des Herstellprozesses sind aber, wie dies beim Beispiel nach den Fig. 1 bis 7 der Fall ist, der Aufquell- und Sterilisationsbehälter 92, der Abkühlbehälter 93, die Beschichtungsvorrichtung 94 und die Inoculierstation 95 in einer chargenweise arbeitenden Aufquell- und Sterilisiereinheit 1 mit einem einzigen Prozessraum 3 vereint. Die Wahl, welche Teile für eine noch rationellere Betriebsweise mehrfach vorliegen sollen lässt sich ganz nach den speziellen Produktepaletten-Bedürfnissen richten.

**Patentansprüche**

1. Anlage zur Herstellung von Mikroorganismenkulturen in Reinkultur auf einem körnigen Nährsubstrat, mit einem Sterilisator, dadurch gekennzeichnet, dass der Sterilisator (1, 92) für eine chemische Sterilisation ausgelegt und mit wenigstens einer Zulauföffnung (24) für ein chemisches Desinfektionsmittel (22) für den Sterilisiervorgang des Nährsubstrates versehen ist.

2. Anlage nach Anspruch 1, dadurch gekennzeichnet, dass der chemische Sterilisator (1, 92) als Heisswasser-Sterilisator vorzugsweise mit Mitteln zur Temperaturführung unter 100° C ausgebildet ist.

3. Anlage nach Anspruch 1, dadurch gekennzeichnet, dass diagrammatisch dem chemischen Sterilisator (1, 92) eine mechanische Kornreinigung (55, 56, 91), enthaltend eine Entstaubungs- sowie eine Sortier- und Reinigungsanlage für das Ausgangskornmaterial vorangeordnet ist, welche vorzugsweise als Trockenreinigung ausgebildet ist.

4. Anlage nach Anspruch 3, dadurch gekennzeichnet, dass die mechanische Kornreinigung (55, 56, 91) räumlich getrennt von dem chemischen Sterilisator (1, 92) angeordnet und über eine geschlossene Förderleitung (20, 26, 27, 33) verbunden ist.

5. Anlage nach Anspruch 1 bis 4, dadurch gekennzeichnet, dass der Sterilisator (1, 92) für einen batchweisen Betrieb und vorzugsweise in zwei oder mehrfach parallel geschalteter Ausführung ausgebildet ist.

6. Anlage nach einem der Ansprüche 1 bis 5, dadurch gekennzeichnet, dass sie mindestens eine Einrichtung (32, 21) für das Impfen des Nährsubstrats aufweist.

7. Anlage nach Anspruch 6, dadurch gekennzeichnet, dass die Einrichtung (32, 21) für das Impfen als unabhängig vom chemischen Sterilisator (92) betreibbare, kontinuierlich oder batchweise arbeitende Kleinmengenimpfung (96; Fig. 6, 76) oder Inoculierstation (1, 95) ausgebildet ist.

8. Anlage nach einem der Ansprüche 1 bis 7, dadurch gekennzeichnet, dass der Sterilisator (1, 92) und die Inoculierstation (1, 95) den gleichen Prozessraum (3) aufweisen, welcher für das Sterilisieren und Impfen zeitlich verschoben benutzbar ist.

9. Anlage nach einem der Ansprüche 1 bis 8, dadurch gekennzeichnet, dass sie eine Beschichtungsvorrichtung (1, 38, 39, 94) für das Beschichten des gequollenen und sterilisierten Ausgangskornmateriales mit einer Haftschicht und vorzugsweise zusätzliche Anschlüsse (20, 21) zum Beschichten der Körner mit Puder (28, 29) aufweist.

10. Anlage nach einem der Ansprüche 3 bis 9, dadurch gekennzeichnet, dass diagrammatisch zwischen der mechanischen Kornreinigung (55, 56, 91) und dem Sterilisator (1, 92) ein Aufquellbehälter (1, 92) vorhanden ist.

11. Anlage nach einem der Ansprüche 1 bis 10, dadurch gekennzeichnet, dass der Aufquell- und Sterilisationsbehälter (1, 92) und/oder der Sterilisator (1, 92) und/oder der Abkühlbehälter (1, 93) und/oder die Beschichtungsvorrichtung (1, 94) und/oder die Inoculierstation (1, 95) zu einer Aufquell- und Sterilisiereinheit (1) mit einem einzigen Prozessraum (3) zusammengefasst sind.

12. Anlage nach einem der Ansprüche 1 bis 11, dadurch gekennzeichnet, dass zumindest der Prozessraum (3) der Aufquell- und Sterilisiereinheit (1) ruhend ausgebildet und auf Wägezellen (5) abgestützt ist, und dass er vorzugsweise bewegliche Rührvorrichtungen (6, 7) aufweist.

13. Anlage nach einem der Ansprüche 1 bis 12, dadurch gekennzeichnet, dass der Aufquellbehälter (1, 92) und/oder der Sterilisator (1, 92) und/oder der Abkühlbehälter (1, 93) einen beheiz- und kühlbaren Mantel (2) vorzugsweise einen Hohlmantel aufweist, an den fest angebrachte Klappen und Schleusen (21, 33) zumindest für die Eintragung respektiv Austragung der Feststoffkomponenten (25, 28, 31) angeordnet sind, dass ferner Inocbomben (32) unmittelbar im Bereich einer Schleuse (21) direkt ankoppelbar sind, wobei vorzugsweise sowohl den Prozessraum (3) wie auch den Schleusen (21) automatische, chemische Reinigungs- und Sterilisiervorrichtungen zugeordnet sind.

14. Anlage nach einem der Ansprüche 1 bis 13, dadurch gekennzeichnet, dass sie mindestens eine vorzugsweise für Vakuum geeignete Unterdruckanlage (17, 19) aufweist, welche mindestens im Sterilisator (1, 92) zur Kühlung und/oder Trocknung und/oder Dampfabsaugung durch Wahl des Unterdruckes einsetzbar ist.

15. Anlage nach einem der Ansprüche 1 bis 14, dadurch gekennzeichnet, dass sie in Bereiche unterschiedlicher Reinhaltung unterteilt ist, wobei insbesondere die Aufquell- und Sterilisiereinheit (1) sowie die Abfüllanlage (57) von sauberen Räumen umgeben sind, in denen zumindest die Abfüllanlage (57) durch eine Reinraumkabine (58) mit einer sterilen Zone (60) und Reinluft zusätzlich geschützt ist.

16. Anlage nach einem der Ansprüche 1 bis 15, dadurch gekennzeichnet, dass sie eine zentrale Steuerung (15) sowie einen Leitstand (70) mit Rezeptverwaltung aufweist, von der einzelne Rezepte sowie Soll/Ist-Mengenbilanztabellen abrufbar sind.

17. Anlage nach einem der Ansprüche 1 bis 16, dadurch gekennzeichnet, dass dem Prozessraum (3) des Aufquellbehälters (1, 92), des Sterilisators (1, 92) des Abkühlbehälters (1, 93), der Beschichtungsvorrichtung (1, 94) und der Inoculierstation (95) sowie den dazu gehörenden Anschlüssen bzw. Schleuse (21, 33) automatisch arbeitende Desinfektionseinrichtungen mit Sprühdüsen (47) zugeordnet sind und vorzugsweise zumindest ein Teil der Rohmaterialbehälter (26, 29, 39, 41, 23, 32, 36) als Tauschcontainer ausgebildet sind, derart, dass über eine zentrale Steuerung (15) ein vollständig automatischer rezeptgesteuerter Prozess für das Spülen und Sterilisieren der Anlageteile durchführbar ist, wobei in entsprechenden Zwischenphasen die Tauschcontainer von Hand wechselbar sind.

18. Verfahren zum Betrieb einer Anlage nach einem der Ansprüche 1 bis 17 zur Aufbereitung eines sterilen, körnigen Nährsubstrates mit 40 bis 60 % Wassergehalt für die Herstellung von Mikroorganismenkulturen in Reinkultur, dadurch gekennzeichnet, dass ohne Zerstörung der Frucht- oder Samenschale gereinigte und im Überschusswasser aufgequollene ganze Früchte wie Getreidekörner als Ausgangskornmaterial unter der Wirkung eines aseptischen, vorzugsweise eines chemischen Mittels sterilisiert werden.

FIG. 1

# FIG. 2

FIG. 3

$H_2O$ (%)    $T_M$, $T_W$ (°C)

Phase   0   1   2   3   4.1   4.2   4.3   5.6.7.8   9.1   9.10.11   12   13   14   $t(h)$

Gültig für Kurve $T_W 60°C$

Start Automatik

$T_M$ (Hohlmantel) bei $T_W = 95°C$

$T_M$ bei $T_W = 60°C$

Aufquellen, Sterilisieren bei 95°C sehr schnell, dafür längere Abkühlungszeit.

Aufquellen, Sterilisieren bei 60°C langsam, dafür kürzere Abkühlungszeit.

$T_W = 95°C$

$T_W = 60°C$

$H_2O$-Gehalt bei 95° $T_W$

$H_2O$-Gehalt bei 60° $T_W$

$T_M \approx 4-5°C$

~295 Min $\hat{=}$ 4.9 Std (bei $T_W = 60°C$)

$t_1$, $t_2$, $t_3$, $t_A$, $t_V$

52%   48%   ~13%

50%

$H_2O$ (%) axis: 120, 110, 100, 90, 80, 70, 60, 50, 40, 30, 20, 10

Temperature values: 95°C, 60°C

FIG. 4

FIG. 5

FIG. 6

35

Inoc II & III

76

31

32

68

21

69

48

49

50

61

Brut A, B, C

Inoc III & IV

EP 0 590 274 A1

# FIG. 7

ROGGEN TROCKEN
PUDER-GEMISCH
ZUSATZMITTEL PROZESSCHEM.
IMPFSTOFF INOC II
DESINFEKTIONS- und REINIGUNGSMITTEL

25
28
38, 43
31
22, 37

81 ANLIEFERUNG / EINGANGSKONTROLLE / QS-LABOR

INOC II
INOC III & IV

53, 53'
SILOS
SILOS
87

86, 86'

INOC II
INOC III
INOC IV
IMPFSTOFF-LAGER

CHEMIE-LAGER

56
39, 41
88

ENTSTAUBEN/ SIEBEN
29
89
IMPFSTOFF UMFUELLSTATION
WASSER

26
VOR-CONTAINER
BEHAELTER

19
VAKUUM
INOC III & IV
CHEMISCHE STATION

MISCHERANLAGE
1
44

HOHLMANTEL-WÄRME/KÄLTE
23, 36

70
ZWISCHEN-SPEICHER
35
45, 46

LEITSYSTEM/ STEUERUNG
15
MISCH- UND DOSIERSYSTEM
76
IMPFSTOFFZUGABE INOC II & III
48
59

STERILE VERPACKUNGSANLAGE

ENDPRODUKT: IMPFSTOFF INOC III & IV

87
IMPFSTOFF-LAGER
ENDPRODUKT: STERILER NÄHRBODEN MIT/OHNE IMPFUNG
SPEDITION/ ENDKONTROLLE
KUNDE X
KUNDE Y
KUNDE Z

50, 65, 67
90

# FIG. 8

```
                    ┌─────────────────┐
                    │   MECHANISCHE   │
                    │  KORNREINIGUNG  │
              91    └─────────────────┘
                             │
                             ▼
                    ┌─────────────────┐
                    │  AUFQUELL- UND  │
                    │  STERILISATIONS-│
                    │    BEHÄLTER     │
              92    └─────────────────┘
                             │
                             ▼
                    ┌─────────────────┐
                    │   ABKÜHLUNGS-   │
                    │    BEHÄLTER     │
              93    └─────────────────┘
                             │
                             ▼
    ┌─────────────┐   ┌─────────────────┐
    │BESCHICHTUNGS-│  │  BESCHICHTUNGS- │
    │ VORRICHTUNG │   │   VORRICHTUNG   │
    └─────────────┘ 94└─────────────────┘
                             │
                             ▼
                    ┌─────────────────┐
                    │ INOCULIERSTATION│
              95    └─────────────────┘
                             │
                             ▼
                    ┌─────────────────┐
                    │ ZWISCHENBEHÄLTER│
              35    └─────────────────┘
                             │
    ┌─────────────┐          ▼
    │KLEINMENGEN- │   ┌─────────────────┐
    │ IMPFUNGEN   │──▶│   ABFÜLLANLAGE  │
    └─────────────┘ 57└─────────────────┘
      96                     │
                             ▼
  ┌──────┐  ┌──────────────────────────┐
  │INOC- │  │KLEIN-│    GROSSMENGEN     │
  │LAGER │◀─│      │                    │
  └──────┘  └──────────────────────────┘
   87
```

97

99

1

98

X,Y

Z

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | US-A-4 152 868 (LINCOLN) <br> * das ganze Dokument * | 1,2,6 | A01G1/04 <br> C12M1/12 |
| Y | | 3 | |
| X | DE-A-40 26 585 (KYNAST) <br> * das ganze Dokument * | 1,2,9,18 | |
| Y | US-A-3 498 796 (BAILEY) <br> * Spalte 3, Zeile 16 - Zeile 25; Anspruch 1 * | 3 | |
| X | US-A-4 922 650 (TAKESHI AKAO) <br> * Spalte 3, Zeile 24 - Spalte 4, Zeile 15; Abbildung 1 * | 1,2,6 | |
| X | US-A-4 263 744 (STOLLER) <br> * Spalte 3, Zeile 7 - Spalte 5, Zeile 47; Abbildungen 1-3 * | 1,2,5,6 | |
| A | CH-A-247 173 (KUNZ) <br> * Seite 1, Zeile 61 - Zeile 65 * | 18 | |

**RECHERCHIERTE SACHGEBIETE (Int.Cl.5)**

A01G
C12M
A23B
A23L

Der vorliegende Recherchenbericht wurde für alle Patentansprüche erstellt

| Recherchenort | Abschlußdatum der Recherche | Prüfer |
|---|---|---|
| DEN HAAG | 21. Januar 1994 | Herygers, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument

EPO FORM 1503 03.82 (P04C03)